# EUROPEAN PATENT APPLICATION

(11) **EP 4 657 043 A1**
(43) Date of publication of application: **03.12.2025**
(21) Application number: 25176468.4
(22) Date of filing: 14.05.2025
(51) Int. Cl.: G01N 15/0227, G01B 9/02, G01B 9/02091, G01N 15/1433, G01N 15/10, G01N 15/1434

(54) **PARTICLE MEASUREMENT APPARATUS**

(30) Priority: 31.05.2024 JP 2024089216
(71) Applicant: Hitachi High-Tech Analysis Corporation, Tokyo 105-6411 (JP)
(72) Inventor: MINEMURA, Hiroyuki, Tokyo, 100-8280 (JP)
(74) Representative: Mewburn Ellis LLP

(57) **Abstract**

A particle measurement apparatus of the invention measures the size of particles in a liquid sample by irradiating the particles with light, and corrects the size of the particles using a correction function that uses as an input value the irradiation position of the light spot in at least one of the X, Y and Z directions.

## Description

### BACKGROUND OF THE INVENTION

### 1. Field of the Invention

The present invention relates to a technique for measuring particles in a solvent using light.

### 2. Description of Related Art

In recent years, the focus of pharmaceutical development has been shifting from small molecule drugs to biopharmaceuticals. Because biopharmaceuticals are polymers, they are prone to aggregation, which can cause toxicity. For example, the U.S. Food and Drug Administration and other agencies are trying to strengthen regulations governing the concentration of aggregates. Therefore, there is a need for a technology that can quantitatively measure the size distribution of a desired concentration of aggregates in the submicron region of 0.1 to 1 um. Protein aggregates are suspended in a solvent and their position changes over time due to Brownian motion. In the invention, techniques for measuring the size and concentration of standard particles such as protein aggregates and polystyrene beads will be described below. These objects to be tested will be collectively described as "particles".

JP06559555B describes a technique for detecting particles using optical measurement. This document discloses "an optical measurement method for generating a light spot by focusing light and measuring an object to be tested whose size is approximately three times or less the size of the light spot, the optical measurement method including: a signal acquisition step of detecting reflected light reflected from the object to be tested by irradiating the object to be tested with the light while moving at least the focal position of the light in an optical axis direction; a step of acquiring correspondence data describing a correspondence between an intensity of the reflected light and a size of the object to be tested; and a size calculation step of acquiring the size of the object to be tested by comparing the correspondence data using the intensity of the reflected light". (Claim 1). The technology described in this document makes it possible to implement high-resolution measurement without the need for pre-processing by amplifying a signal through interference between reflected light and reference light.

WO2020/144754 discloses a technology that eliminates the need for phase adjustment of reference light by scanning a mirror in time domain Optical Coherence Tomography (OCT) by physically scanning an objective lens and receiving the interference between signal light and interference light with four detectors with different phase conditions. Furthermore, based on the technology of JP06559555B, a technology for increasing the scanning speed of the light spot so as not to be affected by the movement of particles undergoing Brownian motion in the liquid has been disclosed.

JP2015-49204A discloses a technology for measuring tomographic images of a living body using a semiconductor laser as a light source, in which a radio frequency is superimposed on a driving current to control the coherence length within a predetermined range, thereby reducing the effect of noise contained in the acquired tomographic images.

JP2008-267853A discloses a technology in which in an apparatus that measures the three-dimensional shape of an electronic component by irradiating the electronic component with irradiation light scanned in mutually orthogonal main and sub-scanning directions and receiving reflected light from the electronic component, the positional deviation of the irradiation light is corrected according to light receiving positions of a pair of photodetectors disposed at positions shifted from the optical axis of the irradiation light.

JP2000-292127A discloses a technology for measuring the height or shape of an object without contact by irradiating the object with laser light, focusing reflected light from the surface of the object on an array of position detection elements, and measuring the signal of the position detection elements output according to the position of the reflected light using the principle of triangulation.

JP2019-045224A discloses a technology relating to a detection apparatus including a control unit that irradiates a target with laser light passing through a projection window, detects the light reflected from the target, and generates measurement information, and correcting a signal value based on either the detection time or the detection intensity of the reflected light from the projection window.

As described above, the techniques described in JP06559555B and WO2020/144754 can obtain the particle size from the measured maximum detection signal Amax by acquiring in advance correspondence data between the particle size and the maximum detection signal obtained at the focal position. Furthermore, the particle concentration can be determined from the number of detected particles. On the other hand, when controlling the performance of a plurality of apparatuses of the same product model by reducing the differences between them, due to the unique characteristics of each apparatus, such as the emission angle of the semiconductor laser as a light source, the coherence length, and the mounting position of the objective lens, when a light spot within a measurement target is scanned three-dimensionally, fluctuations in the energy of the light spot and in the intensity of interference with the reference light occur. Therefore, it is difficult to keep the magnitude of the detection signal constant, that is, to reduce detection sensitivity fluctuations.

JP2008-267853A, JP2000-292127A, and JP2019-045224A disclose correcting the position of a detection signal by geometrical optical means such as triangulation based on the position of reflected light, rather than the intensity of the reflected light, for a measurement target that is sufficiently larger than the wavelength of the light source. Therefore, it is difficult to reduce the detection sensitivity fluctuations due to the wave optical response from microparticles equal to or smaller than the wavelength of the light source targeted by the invention.

### SUMMARY OF THE INVENTION

The invention has been made in consideration of the above-mentioned problems, and has an object to reduce detection sensitivity fluctuations caused by individual characteristics (difference between apparatuses) in a particle measurement apparatus that measures the size of particles in a liquid sample by irradiating the particles with light.

The particle measurement apparatus of the invention measures the size of particles in a liquid sample by irradiating the particles with light, and corrects the size of the particles using a correction function that uses as an input value the irradiation position of the light spot in at least one of the X, Y and Z directions.

According to the invention, in a particle measurement apparatus that measures the size of particles in a liquid sample by irradiating the particles with light, it is possible to reduce detection sensitivity fluctuations caused by individual characteristics of apparatuses (difference between apparatuses). Problems, configurations, and effects other than those described here will become apparent from the following description of the embodiments.

### BRIEF DESCRIPTION OF THE DRAWINGS

FIG. 1 is a schematic diagram showing a relationship between defocus and detection signals in JP06559555B and WO2020/144754;
FIG. 2 is a simulation result of the invention showing a relationship between particle size and a maximum detection signal by using an interference detection optical system described in JP06559555B and WO2020/144754;
FIG. 3 is an example of measurement data;
FIG. 4A is an example of an experimental result quantifying detection sensitivity fluctuations;
FIG. 4B is an example of an experimental result quantifying detection sensitivity fluctuations;
FIG. 5 is a schematic diagram showing a relationship between a semiconductor laser as a light source and an intensity distribution of emitted light;
FIG. 6A is a schematic diagram showing laser light when a light spot is formed in the center in the X or Y direction;
FIG. 6B is a schematic diagram showing laser light when a light spot is formed at an end in the X or Y direction;
FIG. 7 is a schematic diagram showing detection sensitivity fluctuations that occur when a light spot is scanned in the Z direction;
FIG. 8 is a flowchart illustrating a procedure for calibrating individual characteristics of each apparatus;
FIG. 9 is a flowchart showing the operation of the apparatus when the apparatus is operated in an operational environment;
FIG. 10A shows the results of a correction model using a first-order polynomial shown in Equation 1;
FIG. 10B shows the results of a correction model using a second-order polynomial shown in Equation 2;
FIG. 10C shows the results of a correction model using a third-order polynomial shown in Equation 3;
FIG. 10D shows the results of a correction model using a fourth-order polynomial shown in Equation 4;
FIG. 10E shows the results of a correction model using a three-dimensional Gaussian distribution formula shown in Equation 5;
FIG. 10F shows the results of a correction model using a three-dimensional offset Gaussian distribution formula shown in Equation 6;
FIG. 11 shows a size-frequency distribution of raw data before application of a detection sensitivity correction function of the invention;
FIG. 12A shows the results of a correction model using the first-order polynomial shown in Equation 1;
FIG. 12B shows the results of a correction model using the second-order polynomial shown in Equation 2;
FIG. 12C shows the results of a correction model using the third-order polynomial shown in Equation 3;
FIG. 12D shows the results of a correction model using the fourth-order polynomial shown in Equation 4;
FIG. 12E shows the results of a correction model using a three-dimensional Gaussian distribution formula shown in Equation 5;
FIG. 12F shows the results of a correction model using a three-dimensional offset Gaussian distribution formula shown in Equation 6;
FIG. 13 is a summary of the results of a comparison of RMS values of standard particle sizes, which indicates the effect of a detection sensitivity correction method of the invention;
FIG. 14A shows the results of a correction model using a second-order polynomial shown in Equation 7;
FIG. 14B shows the result of a correction model in which the second-order polynomial shown in Equation 8 and a Gaussian distribution are combined;
FIG. 15A shows the results of a correction model using a second-order polynomial shown in Equation 7;
FIG. 15B shows the result of a correction model in which the second-order polynomial shown in Equation 8 and a Gaussian distribution are combined;
FIG. 16 is a summary of the results of a comparison of RMS values of standard particle sizes, which indicates the effect of the detection sensitivity correction method of the invention; and
FIG. 17 is a diagram illustrating an example of the configuration of the particle measurement apparatus according to an embodiment.

### DESCRIPTION OF EMBODIMENTS

### <Background of the invention>

A measurement targets handled by the invention are microparticles on the order of submicron to microns that undergo Brownian motion while suspended in a solvent, such as protein aggregates in biopharmaceuticals. Here, the aim is to precisely measure the size and concentration of the measurement target by utilizing the wave-optical response of laser light.

In the following description of the invention, the optical axis direction is taken as the Z axis, and the X and Y axes are taken in a plane perpendicular to the Z axis, and the explanation will be given assuming that the positions of the light spot in the X, Y and Z axis directions are x, y and z, respectively.

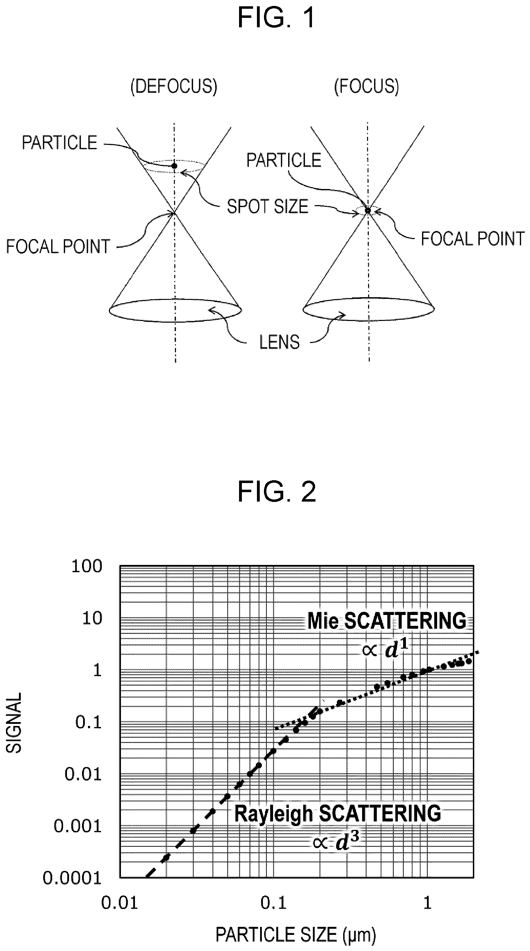

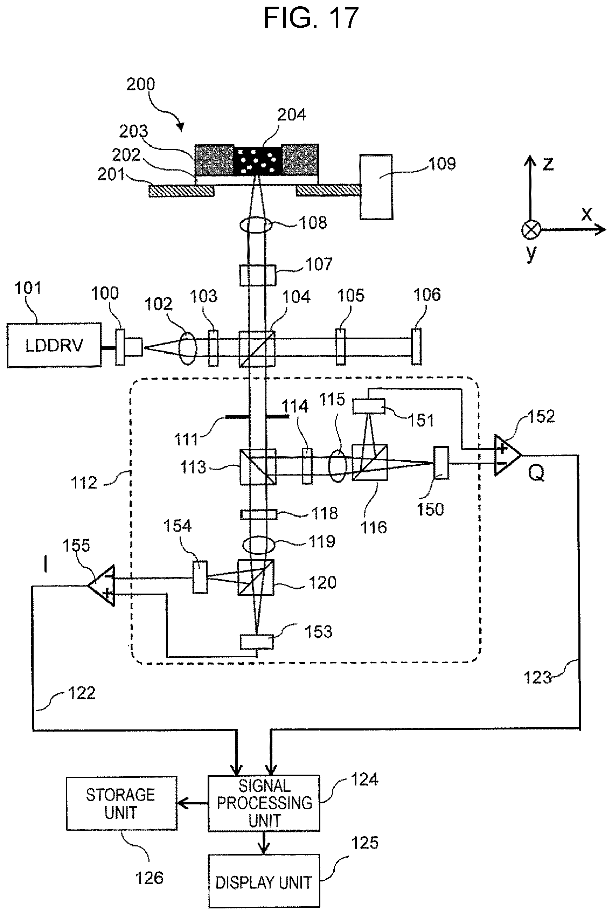

FIG. 1 is a schematic diagram showing a relationship between defocus and detection signals in JP06559555B and WO2020/144754. When the direction of the optical axis of an objective lens is z, the diameter of the light spot at the z position of the particle to be measured is determined by the wavelength of a light source, the numerical aperture of the objective lens, and the amount of defocus. The amount of reflected light from the particle is approximated according to the ratio of the area of the particle to the diameter of the light spot, and the detection signal increases or decreases. The left side of FIG. 1 is a schematic diagram showing a state in which a particle to be measured is defocused from the focal position of the objective lens. In this case, the size of the particle is relatively small compared to the diameter of the light spot, and the amount of reflected light received through the objective lens and the detection signal obtained by converting the reflected light into an electrical signal are relatively small. On the other hand, the right side of FIG. 1 is a schematic diagram showing a state in which a particle to be measured is at the focal position of the objective lens. In this case, the size of the particle relative to the diameter of the light spot becomes maximum, and the amount of reflected light received through the objective lens and the detection signal become maximum. FIG. 17 of JP06559555B discloses that when the size (diameter) of the target particle is approximately three times or less the minimum light spot diameter at the focal point, the particle size and the maximum detection signal obtained at the focal position are uniquely determined, and this correspondence data is acquired in advance, thereby it is possible to determine the size of the particle from the measured maximum detection signal.

FIG. 2 is a simulation result of the invention showing a relationship between particle size and a maximum detection signal by using an interference detection optical system described in JP06559555B and WO2020/144754. Here, the simulation is performed by combining Mie scattering and Fraunhofer diffraction. The wavelength of the light source is 785 nm, the numerical aperture of the objective lens is 0.45, the refractive index of the particles is 1.40 based on experimental results for protein aggregates, and the refractive index of the solvent is 1.333, corresponding to pure water. As can be seen from FIG. 2, when the particle size is d, in the region of d < 0.1 µm, the maximum detection signal is proportional to the third power of d, corresponding to Rayleigh scattering, and in the region of d > 0.3 µm, the maximum detection signal is proportional to the first power of d, corresponding to Mie scattering. The linearity of the particle size and the maximum detection signal in the region of d > 0.3 µm coincides with FIG. 17 of JP06559555B.

To avoid any misunderstanding regarding these particle size dependencies, description is provided below. It is generally known that the energy intensity of scattered light in Rayleigh scattering is proportional to the sixth power of the particle size d. The magnitude of the electrical signal obtained by photoelectrically converting the reflected light with a photodetector is also proportional to the sixth power of d. The optical systems described in JP06559555B, WO2020/144754 and the invention utilize homodyne interference, which causes reflected light and a reference light to interfere with each other and amplify the light. In this case, the "electric field amplitude" rather than the "energy" of the reflected light is converted into an electrical signal, so the maximum detection signal is proportional to the third power of d. By using such an optical system, the change in the magnitude of the detection signal due to particle size is more gradual than in the method of photoelectrically converting the "energy" of reflected light, which is advantageous in widening the dynamic range of measurable particle sizes. When a semiconductor laser is used as the light source, it is possible to reduce laser noise caused mainly by return light by superimposing a radio frequency on the drive current using the technique described in JP2015-49204A.

While the energy intensity of scattered light in the widely known Rayleigh scattering is proportional to the sixth power of d through light energy detection, the energy intensity is proportional to the third power of d by converting the electric field amplitude of the reflected light into a detection signal through interference amplification in this method. This means that the change in the magnitude of the detection signal is small relative to the size range of the measurement target, and thus this method has a superior dynamic range compared to known methods.

A specific measurement method will now be described based on the above principle. With the optical axis direction as Z, the detection signal obtained by three-dimensionally scanning the light spot focused by the objective lens inside the measurement target is called three-dimensional image data. Three-dimensional image data is generated by storing a control signal or a position monitor signal for scanning the light spot in the X, Y, and Z directions and the detection signal as time-series data using an AD converter or the like, and then processing the time-series data.

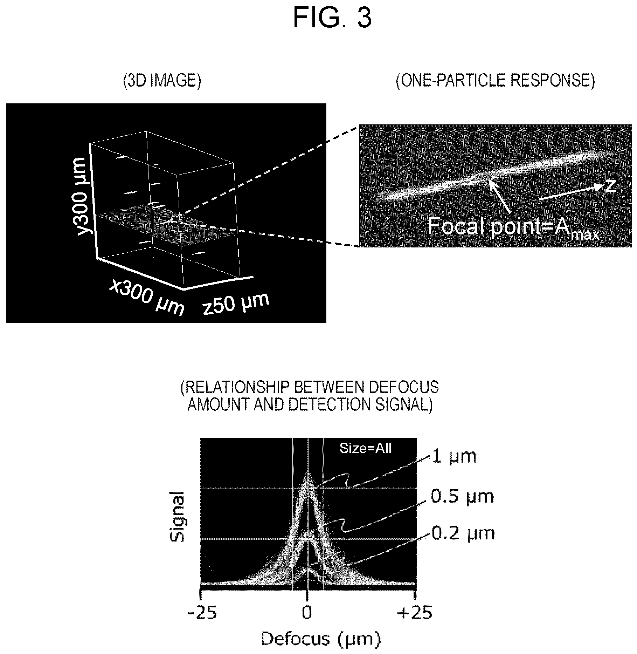

FIG. 3 shows an example of the measurement data. The upper left part of FIG. 3 shows a visualized three-dimensional image data. Here, the scanning range of the light spot is set to 300 µm, 300 µm, and 50 µm in the X, Y, and Z directions, respectively. The upper right part of FIG. 3 shows an enlarged view of the data for one separated particle. The maximum value Amax of the detection signal obtained when the light spot position and the particle position are aligned is the size evaluation index for the particle. The lower part of FIG. 3 shows the relationship between the measured defocus amount and magnitude of the detection signal for multiple particles, overlaid on each other. As can be seen from FIG. 3, the detection signal Amax when the defocus amount is zero (at the focal point) is an evaluation index for the size of the particle.

In order to facilitate understanding of the invention, actual measurement results relating to the detection sensitivity fluctuations during scanning of a light spot, which occurs due to the individual characteristics of two apparatuses, will be specifically shown here.

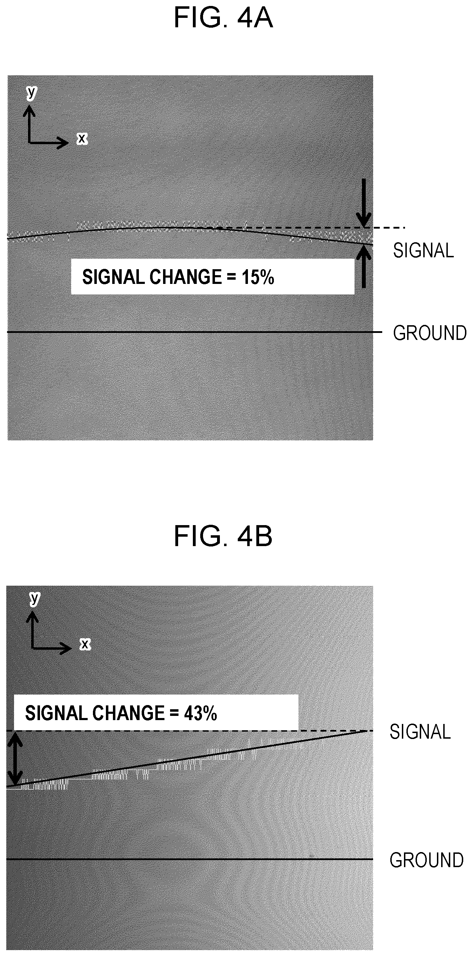

FIGS. 4A and 4B are examples of an experimental result quantifying detection sensitivity fluctuations. Here, the light spot is focused on the bottom glass of the sample container to obtain the detection signal. FIG. 4A shows a two-dimensional image obtained by converting the detection signal from one apparatus into brightness information. As can be seen from FIG. 4A, the change in the detection signal when the light spot is scanned in the X direction is dominant, being maximum at the center and minimum at the right end. Since the reflectance of the bottom glass of the sample container is constant, the fluctuations in the detection signal, that is, the fluctuations in the detection sensitivity of this apparatus, is approximately 15%. FIG. 4B shows a two-dimensional image obtained by converting the detection signal from another apparatus into brightness information. As can be seen from FIG. 4B, the change in the detection signal when the light spot is scanned in the X direction is dominant, being maximum at the right end and minimum at the left end. The fluctuations in the detection signal from this apparatus, that is, the detection sensitivity fluctuations, is approximately 43%.

To avoid any misunderstanding regarding the detection sensitivity fluctuations shown here, description is provided below. In a case where the measurement target is a microparticle suspended in a sample container and the standard measurement position for the three-dimensional image data is set to a position approximately 500 µm away from the bottom glass of the sample container, the optical system of the apparatus is aberration-corrected such that spherical aberration is minimized at this point. Therefore, when measuring the bottom glass of the sample container, spherical aberration of approximately 2λ occurs. Therefore, the detection sensitivity fluctuation shown in FIG. 4 is larger than the detection sensitivity fluctuation that occurs when actually measuring microparticles such as protein aggregates to be measured. An object of the invention is to reduce detection sensitivity fluctuations that occur when measuring microparticles such as protein aggregates that are measurement targets that undergo Brownian motion in a solvent.

Next, the main cause of the detection sensitivity fluctuations caused by the scanning of the light spot will be described.

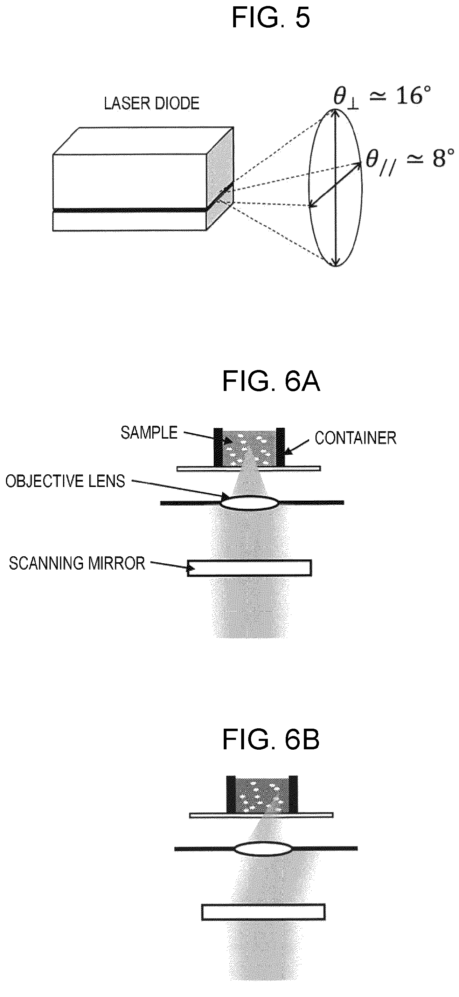

FIG. 5 is a schematic diagram showing a relationship between a semiconductor laser as a light source and an intensity distribution of the emitted light. The cavity of a semiconductor laser is larger in the horizontal direction (etching direction) than in the vertical direction (stacking direction), the intensity distribution of the emitted laser light becomes a Gaussian distribution with half-maximum full-width θ⊥ (≅ 16 degrees) and θ_{//} (≅ 8 degrees) due to the effects of diffraction, and the parallel beam converted by the collimating lens has a corresponding two-dimensional Gaussian intensity distribution.

FIG. 6A is a schematic diagram showing laser light when the light spot is formed in the center in the X or Y direction. As can be seen from FIG. 6A, the parallel beam is not deflected by the scanning mirror, and the light at the center of the parallel beam is collected by the objective lens.

FIG. 6B is a schematic diagram showing laser light when the light spot is formed at an end in the X or Y direction. As shown in FIG. 6B, the parallel beam is deflected by the scanning mirror, and the light at the periphery of the parallel beam is collected by the objective lens. At this time, the intensity of the light focused on the light spot is lower than that at the center.

Due to these factors, the intensity of light focused on the light spot varies as the light spot is scanned in the X or Y direction. In the above two apparatuses, the θ_{//} direction in which the emission angle distribution of the semiconductor laser is narrow is aligned with the X direction, so that the detection sensitivity fluctuation in the X direction is larger than that in the Y direction, as shown in FIGS. 4A and 4B.

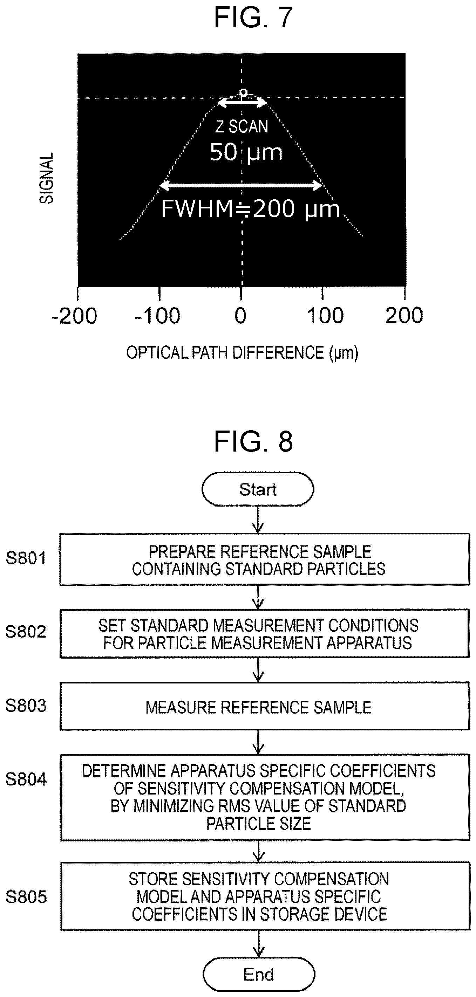

FIG. 7 is a schematic diagram showing the detection sensitivity fluctuation that occurs when the light spot is scanned in the Z direction. It is widely known that the magnitude of the detection signal obtained by interference between the signal light reflected from the measurement target and the reference light has Gaussian distribution characteristics according to the optical path length difference between the two light beams. Here, the coherence length is defined as the optical path length difference (FWHM value) at which the detection signal becomes 1/2 of the maximum value. As can be seen in FIG. 7, the coherence length is approximately 200 µm. In a case where the amount of movement of the light spot in the Z direction when acquiring three-dimensional image data is 50 µm, the sensitivity fluctuation of the detection signal occurs depending on the position z in the Z direction. This sensitivity fluctuation varies for each apparatus and each emission power depending on the semiconductor laser element, the emission power, and the conditions of radio frequency superposition.

In the following description of the invention, the optical axis direction is taken as the Z axis, and the X and Y axes are taken in a plane perpendicular to the Z axis, and the description will be given assuming that the positions of the light spot in the X, Y and Z axis directions are x, y and z, respectively. In order to facilitate understanding of the detection sensitivity correction function, unless otherwise specified, the x, y, and z values are expressed as positions normalized to ±1 within the measurement scanning range. For the sake of simplicity, the maximum detection signal Amax obtained when the particle is at the focal position of the objective lens is simply referred to as the detection signal. Furthermore, in each embodiment, unless otherwise specified, the correction results of the invention for the apparatus with the larger detection sensitivity fluctuations shown in FIG. 4B are shown. In the invention, the individual characteristics of the apparatus are stored in a storage device or the like as coefficients of a model equation during calibration, and it goes without saying that in any apparatus that satisfies certain performance standards, including the apparatus with the smaller detection sensitivity fluctuations shown in FIG. 4A, it is possible to reduce the difference between apparatuses that appear in the measurement results by correcting the detection sensitivity.

### <Embodiment 1: Method for measuring and correcting sensitivity fluctuations during particle measurement>

The measurement targets handled by the invention are microparticles on the order of submicron to microns that undergo Brownian motion while suspended in a solvent, such as protein aggregates in biopharmaceuticals. Because the positions, sizes, and concentrations of the microparticles to be measured are unknown, it is not possible to quantify the detection sensitivity fluctuations that differ depending on apparatuses using biopharmaceutical samples. Furthermore, as described above, the measurement data for the bottom glass of the sample container is accompanied by large spherical aberration, and therefore can only be used as a guide for detection sensitivity fluctuations.

In the invention, a method is shown in which the detection sensitivity fluctuation is measured using a commercially available polystyrene standard particle suspension with uniform particle size and controllable concentration, and each coefficient of the detection sensitivity correction function described below is determined. Regarding the selection of polystyrene standard particles, any size in the submicron region can be selected, but here polystyrene particles with an average size of 0.551 µm whose size is accurately calibrated in advance by observation with a scanning electron microscope are used. This is diluted to a particle concentration of approximately 10 M particles/mL, and the resultant is sealed in a sample container and used as a reference sample. Since the position of each polystyrene particle in the reference sample changes randomly due to Brownian motion, it is possible to obtain detection signals with almost uniform standard deviations in the X, Y, and Z directions by acquiring a sufficient number of three-dimensional image data. Here, approximately 12,600 calibration particle data (x, y, z, Amax) are prepared.

FIG. 8 is a flowchart illustrating a procedure for calibrating the individual characteristics of each apparatus. In step S801, a reference sample containing the standard particles described above is prepared. In step S802, standard measurement conditions are set for the particle measurement apparatus to be calibrated. In step S803, three-dimensional image data is acquired according to the above-described method to acquire calibration particle data from standard particles contained in the reference sample. In step S804, each coefficient of the detection sensitivity correction function is determined based on a model equation described later such that the RMS value of the detection signal is minimized. In step S805, the type of model equation and the value of each coefficient are stored in a storage device. In this way, the individual characteristics of each apparatus can be acquired and stored as coefficients of the determined model equation.

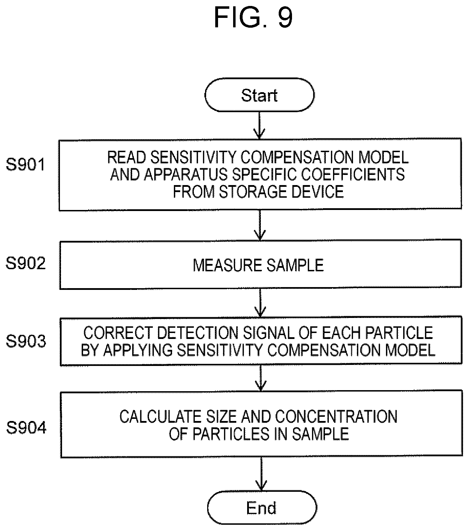

FIG. 9 is a flowchart showing the operation when the apparatus is operated in the operational environment. In step S901, the type and each coefficient of model equation are read from the storage. In step S902, the sample is measured. In step S903, sensitivity correction is performed for the position and detection signal (x, y, z, Amax) of each particle using the model equation and each coefficient, thereby obtaining Amax' from Amax. In step S904, from Amax', the size and concentration of the target particles contained in the sample are calculated and presented.

As a result, it is possible to correct the detection sensitivity for the individual characteristics of each apparatus, which is determined during calibration (usually at the time of shipment), in the operational environment, and obtain measurement data in which differences between a plurality of apparatuses are reduced.

### <Embodiment 2: Method for correcting detection sensitivity with respect to three-dimensional position of light spot>

In Embodiment 2 of the invention, a specific example of the correction model equation described in Embodiment 1 will be described. The correction model equation (detection sensitivity correction function) is expressed as η(x, y, z).

The following equation is a correction model using a first-order polynomial. C_{xyz0}, Cₓ₁, C_{y1}, and C_{z1} are coefficients indicating the amount of correction of the detection sensitivity with respect to the individual characteristics of each apparatus.
[Mathematical expression 1] $η \left(x, y, z\right) = {C}_{xyz 0} + {C}_{x 1} x + {C}_{y 1} y + {C}_{z 1} z$

The following equation is a correction model using a second-order polynomial. C_{xyz0}, Cₓ₁, Cₓ₂, C_{y1}, C_{y2}, C_{z1}, and C_{z2} are coefficients indicating the amount of correction of the detection sensitivity with respect to the individual characteristics of each apparatus.
[Mathematical expression 2] $η \left(x, y, z\right) = {C}_{xyz 0} + {C}_{x 1} x + {C}_{x 2} {x}^{2} + {C}_{y 1} y + {C}_{y 2} {y}^{2} + {C}_{z 1} z + {C}_{z 2} {z}^{2}$

The following equation is a correction model using a third-order polynomial. C_{xyz0}, Cₓ₁, Cₓ₂, Cₓ₃, C_{y1}, C_{y2}, C_{y3}, C_{z1}, C_{z2}, and C_{z3} are coefficients indicating the amount of correction of the detection sensitivity with respect to the individual characteristics of each apparatus.
[Mathematical expression 3] $\begin{matrix}η \left(x, y, z\right) = {C}_{xyz 0} + {C}_{x 1} x + {C}_{x 2} {x}^{2} + {C}_{x 3} {x}^{3} + {C}_{y 1} y + {C}_{y 2} {y}^{2} + \\ {C}_{y 3} {y}^{3} + {C}_{z 1} z + {C}_{z 2} {z}^{2} + {C}_{z 3} {z}^{3}\end{matrix}$

The following equation is a correction model using a fourth-order polynomial. C_{xyz0}, Cₓ₁, Cₓ₂, Cₓ₃, Cₓ₄, C_{y1}, C_{y2}, C_{y3}, C_{y4}, C_{z1}, C_{z2}, C_{z3}, and C_{z4} are coefficients indicating the amount of correction of the detection sensitivity with respect to the individual characteristics of each apparatus.
[Mathematical expression 4] $\begin{matrix}η \left(x, y, z\right) = {C}_{xyz 0} + {C}_{x 1} x + {C}_{x 2} {x}^{2} + {C}_{x 3} {x}^{3} + {C}_{x 4} {x}^{4} + {C}_{y 1} y + {C}_{y 2} {y}^{2} + {C}_{y 3} {y}^{3} + \\ {C}_{y 4} {y}^{4} + {C}_{z 1} z + {C}_{z 2} {z}^{2} + {C}_{z 3} {z}^{3} + {C}_{z 4} {z}^{4}\end{matrix}$

Although the correction model equations using first to fourth-order polynomials have been described above, it should be noted that in the invention, fifth or higher order polynomials can also be used as correction models for detection sensitivity.

The following equation is a correction model based on the three-dimensional Gaussian distribution formula. C_{xyz0}, µₓ, µ_{y}, µ_{z}, σ ₓ, σ_{y}, and σ_{z} are coefficients indicating the amount of correction of the detection sensitivity with respect to the individual characteristics of each apparatus.
[Mathematical expression 5] $η \left(x, y, z\right) = {C}_{xyz 0} ⋅ \frac{1}{exp \left(-\frac{{\left(x-{μ}_{x}\right)}^{2}}{2 {{σ}_{x}}^{2}}\right)} ⋅ \frac{1}{exp \left(-\frac{{\left(y-{μ}_{y}\right)}^{2}}{2 {{σ}_{y}}^{2}}\right)} ⋅ \frac{1}{exp \left(-\frac{{\left(z-{μ}_{z}\right)}^{2}}{2 {{σ}_{z}}^{2}}\right)}$

The following equation is a correction model based on a three-dimensional offset Gaussian distribution formula. aₓ, a_{y}, a_{z}, bₓ, b_{y}, b_{z}, µₓ, µ_{y}, µ_{z}, σₓ, σ_{y}, and σ_{z} are coefficients indicating the amount of correction of the detection sensitivity with respect to the individual characteristics of each apparatus. The difference with Equation 5 is that the range of application to the individual characteristics of each apparatus has been improved by introducing direct current values aₓ, a_{y}, and a_{z} of the sensitivity correction and the sensitivity correction amounts bₓ, b_{y}, and b_{z} that follow a Gaussian distribution.
[Mathematical expression 6] $\begin{matrix}η \left(x, y, z\right) = \frac{1}{{a}_{x} + {b}_{x} ⋅ exp \left(-\frac{{\left(x-{μ}_{x}\right)}^{2}}{2 {{σ}_{x}}^{2}}\right)} \\ ⋅ \frac{1}{ay + {b}_{y} ⋅ exp \left(-\frac{{\left(y-{μ}_{y}\right)}^{2}}{2 {{σ}_{y}}^{2}}\right)} \\ ⋅ \frac{1}{{a}_{z} + {b}_{z} ⋅ exp \left(-\frac{{\left(z-{μ}_{z}\right)}^{2}}{2 {{σ}_{z}}^{2}}\right)}\end{matrix}$

In the invention, in addition to the Gaussian distribution shown here, various special functions can be used according to the characteristics of an apparatus, such as an error function which is its integral form, Poisson distribution derived from binomial distribution, and Chi-square distribution obtained by squaring a random variable that follows the Gaussian distribution.

The results of performing sensitivity calibration for each model equation according to the method shown in FIG. 8 are described below.

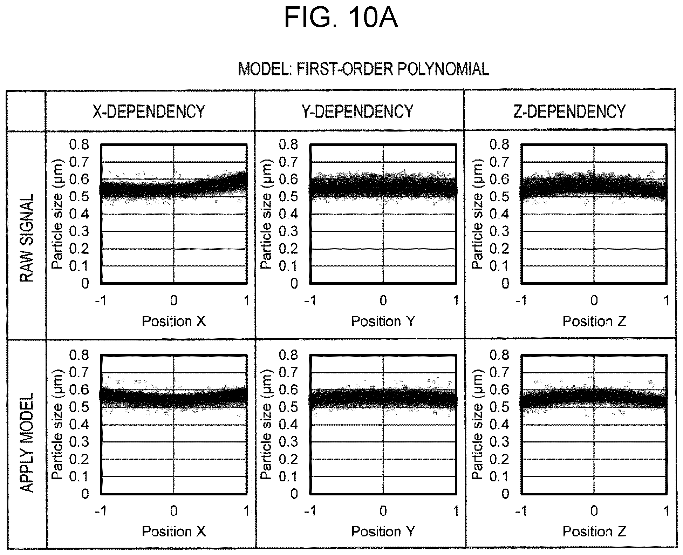

FIG. 10A shows the results of the correction model using the first-order polynomial shown in Equation 1. The upper part of the figure shows the results of the raw data before the application of the detection sensitivity correction function of the invention, and the lower part shows the results after the application of the detection sensitivity correction function of the invention. In each figure, the horizontal axis indicates the normalized light spot position, and the vertical axis indicates the measured particle size. Each plot point in the figure represents an experimental result corresponding to each piece of the calibration particle data described above. As can be seen in the figure, the results of the raw data vary depending on the spot positions x, y, and z. As described above, this is due to the detection sensitivity fluctuations depending on the individual characteristics of each apparatus. On the other hand, it can be seen that from the results of applying the detection sensitivity correction function of the invention, the variation in the vertical axis direction of each plot point (variation in measurement size) is improved. In particular, it can be seen that the dependency in the X-axis direction is improved to a symmetric characteristic with the center (x = 0) of the scanning range of the light spot being the extreme value by applying the detection sensitivity correction function of the invention.

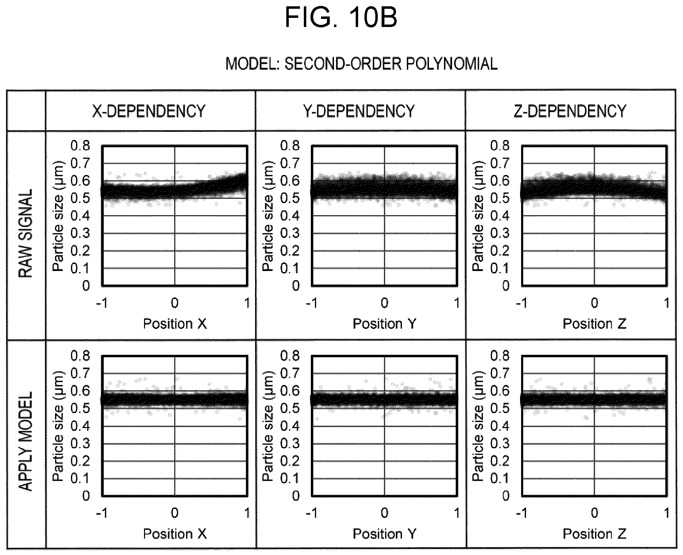

FIG. 10B shows the results of the correction model using the second-order polynomial shown in Equation 2. As in FIG. 10A, the results of the raw data and the results of applying the detection sensitivity correction function of the invention are shown. As can be seen from the figure, by applying the detection sensitivity correction function of the invention, the spot position dependence in the X, Y, and Z directions is reduced to an extent that it is not visible. The variation along the vertical axis of the figure represents the SNR of the apparatus and the size variation of the standard particles themselves. The effect of the invention is remarkable when using a second-order polynomial, as described above. This is a result reflecting the empirical fact that fluctuations in detection sensitivity are caused by Gaussian distributions in all of the X, Y, and Z directions, and that the changes in the Gaussian distribution near the center can be approximated by a second-order polynomial.

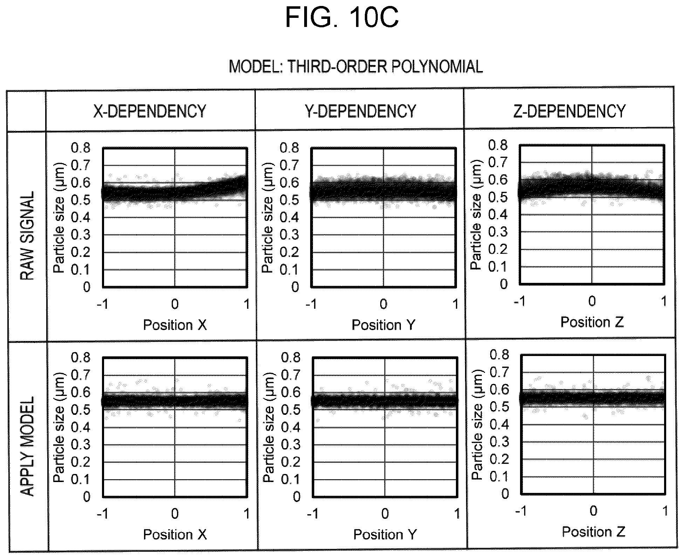

FIG. 10C shows the results of the correction model using the third-order polynomial shown in Equation 3. As can be seen from the figure, by applying the detection sensitivity correction function of the invention, the spot position dependence in the X, Y, and Z directions is reduced to an extent that it is not visible. As shown in the definition, this correction model includes a second-order polynomial, so it is natural that the reduction performance is equal to or greater than that of FIG. 10B.

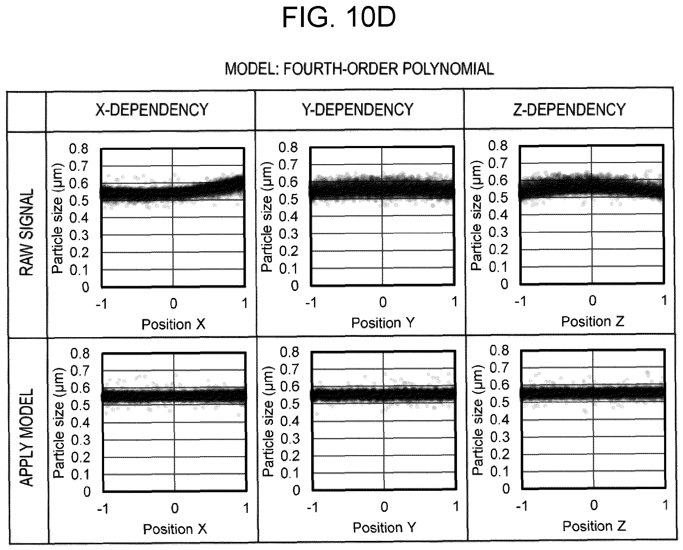

FIG. 10D shows the results of the correction model using the fourth-order polynomial shown in Equation 4. As can be seen from the figure, by applying the detection sensitivity correction function of the invention, the spot position dependence in the X, Y, and Z directions is reduced to an extent that it is not visible. As shown in the definition, this correction model includes a second-order polynomial, so it is natural that the reduction performance is equal to or greater than that of FIG. 10B.

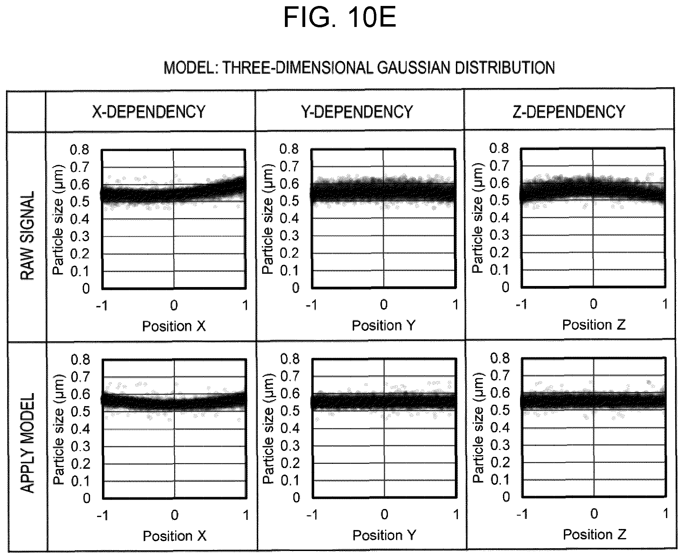

FIG. 10E shows the results of a correction model using a three-dimensional Gaussian distribution formula shown in Equation 5. As can be seen from figure, by applying the detection sensitivity correction function of the invention, the spot position dependence in the X, Y, and Z directions is improved compared to the raw data. However, similarly to FIG. 10A, the sensitivity fluctuations in the X direction remains visible, which needs to be improved.

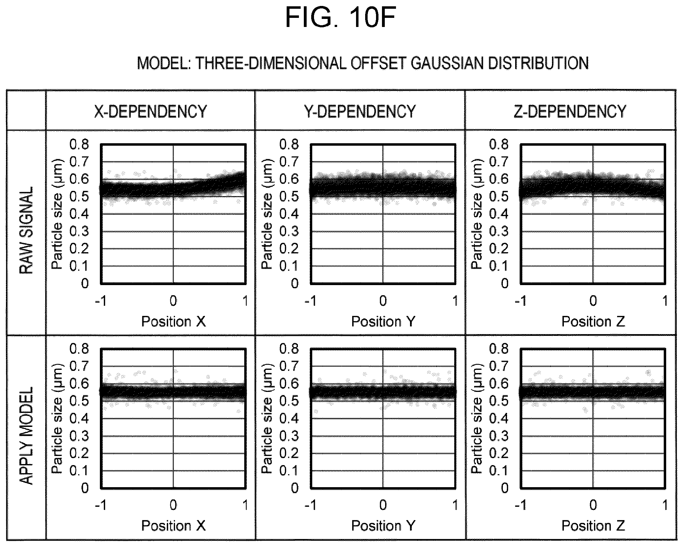

FIG. 10F shows the results of a correction model using a three-dimensional offset Gaussian distribution formula shown in Equation 6. As mentioned above, this correction model improves the range of application of Equation 5. As an effect, it can be seen that the spot position dependence in the X, Y, and Z directions is reduced to an extent that it is not visible by applying the detection sensitivity correction function of the invention.

To intuitively and quantitatively compare the above results, the frequency distribution of the sizes of the measured standard particles is shown below.

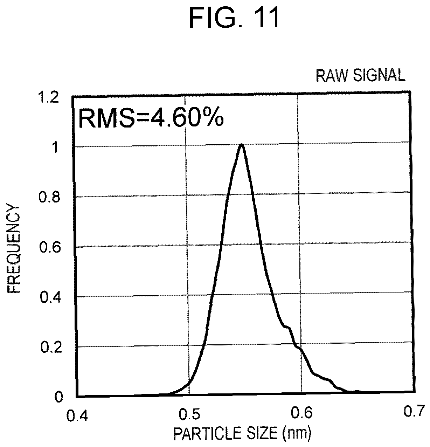

FIG. 11 shows the size-frequency distribution of raw data before the detection sensitivity correction function of the invention is applied. As can be seen from FIG. 11, the distribution is asymmetric with respect to the peak. The tail of the distribution on the larger size side (right side) reflects the apparatus characteristics on the +X direction side (the side with higher detection sensitivity) shown above. When the size of the standard particles is precisely measured, the size-frequency distribution needs to be symmetrical about a peak. The RMS value, which represents the variation in the measured size of the standard particles, is 4.60%.

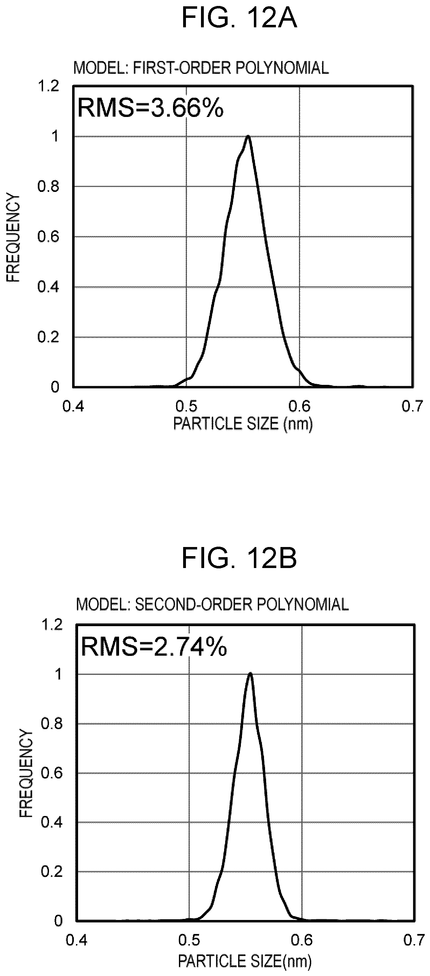

FIG. 12A shows the results of the correction model using the first-order polynomial shown in Equation 1. As can be seen, the symmetry of the size-frequency distribution about a peak is improved compared to the raw data of FIG. 11. This is as described in the description with reference to FIG. 10A. The RMS value of the measured size of the standard particles is 3.66%.

FIG. 12B shows the results of a correction model using a second-order polynomial shown in Equation 2. As can be seen from FIG. 12B, application of the detection sensitivity correction function of the invention improves the symmetry of the size frequency distribution with respect to the peak, and also improves the distribution so as to narrow the spread. The RMS value of the measured size of the standard particles is 2.74%.

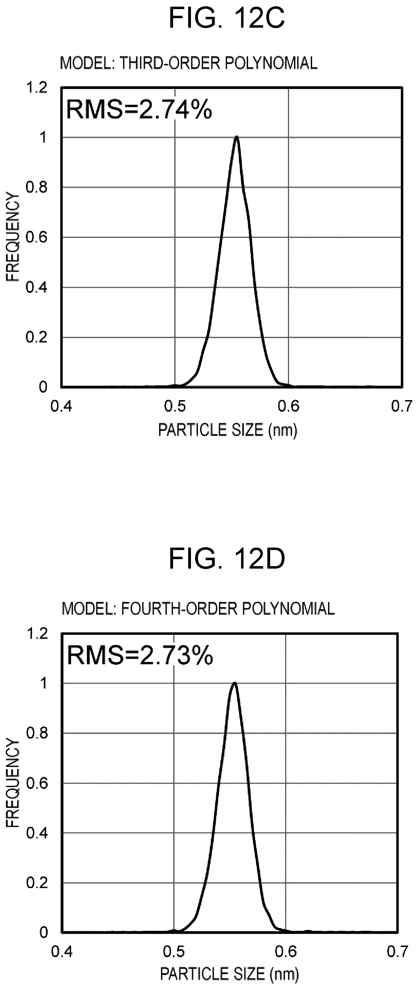

FIG. 12C shows the results of the correction model using the third-order polynomial shown in Equation 3. As can be seen from FIG. 12C, application of the detection sensitivity correction function of the invention improves the symmetry of the size-frequency distribution with respect to the peak, and also improves the distribution so as to narrow the spread. The RMS value of the measured size of the standard particles is 2.74%. As shown in the definition, this correction model includes a second-order polynomial, so it is natural that the reduction performance is equal to or greater than that of FIG. 12B.

FIG. 12D shows the results of the correction model using the fourth-order polynomial shown in Equation 4. As can be seen from FIG. 12D, application of the detection sensitivity correction function of the invention improves the symmetry of the size-frequency distribution with respect to the peak, and also improves the distribution so as to narrow the spread. The RMS value of the measured size of the standard particles is 2.73%. As shown in the definition, this correction model includes a second-order polynomial, so it is natural that the reduction performance is equal to or greater than that of FIG. 12B.

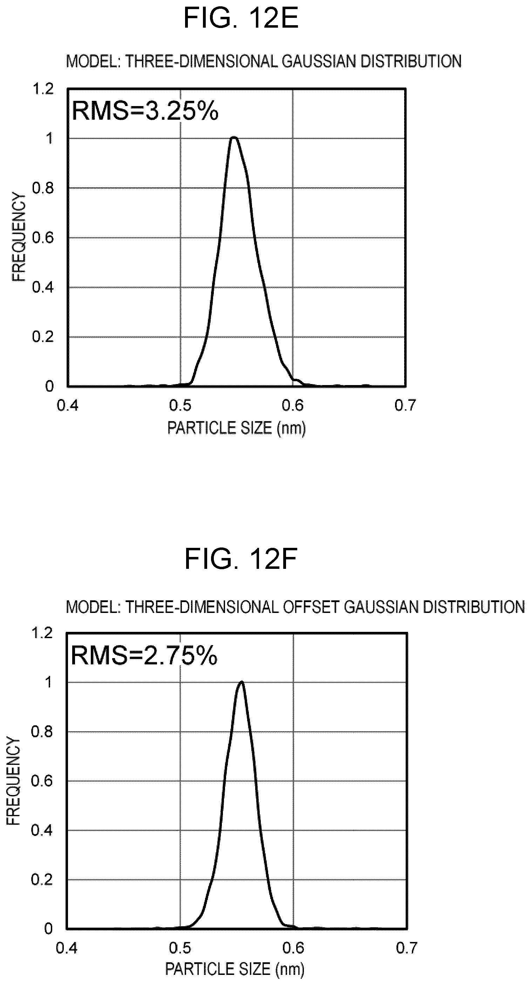

FIG. 12E shows the results of a correction model using a three-dimensional Gaussian distribution formula shown in Equation 5. As can be seen from FIG. 12E, application of the detection sensitivity correction function of the invention improves the symmetry of the size-frequency distribution with respect to the peak, and also improves the distribution so as to narrow the spread. The RMS value of the measured size of the standard particles is 3.25%.

FIG. 12F shows the results of a correction model using a three-dimensional offset Gaussian distribution formula shown in Equation 6. As can be seen from FIG. 12F, application of the detection sensitivity correction function of the invention improves the symmetry of the size-frequency distribution with respect to the peak, and also improves the distribution so as to narrow the spread. The RMS value of the measured size of the standard particles is 2.75%. As described above, this correction model improves the range of application of Equation 5, and it is natural that the RMS value is smaller than that in FIG. 12E.

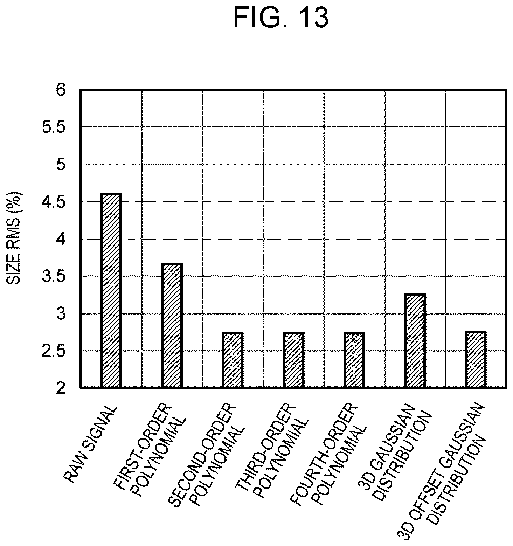

FIG. 13 shows a summary of the results of a comparison of RMS values of standard particle sizes, which indicates the effect of the detection sensitivity correction method of the invention. In FIG. 13, the horizontal axis is the correction model equation shown above, and the vertical axis is the RMS value of the measured standard particle size. As can be seen from FIG. 13, the RMS values of the standard particle size are smaller for all correction model equations by applying the invention, compared with the raw data to which the invention is not applied, and the effect of the detection sensitivity correction method of the invention is quantitatively shown. In addition, the RMS values of the standard particle size obtained by applying the second-order polynomial, third-order polynomial, fourth-order polynomial, and three-dimensional offset Gaussian distribution formula are almost the same and have the smallest values, which indicates that these model equations are suitable for the characteristics of the apparatus shown here. The fewer the number of coefficients included in the model equation, the easier and more stable the calibration can be performed and the more robust it is when operated in an operational environment. For example, the second-order polynomial in Equation 2 is said to be suitable as a sensitivity correction model equation.

Description will be added regarding the selection of an appropriate model equation according to the design of the apparatus and the characteristics of the components. It goes without saying that when a sufficient level of detection sensitivity can be corrected, the simpler the model equation is and the fewer the number of coefficients, the more robust it is. In an apparatus designed to reduce the fluctuations in detection sensitivity of each apparatus by selecting the components, the first-order polynomial in Equation 1 or the Gaussian distribution in Equation 5 is appropriate as a simple model equation. When the particles to be measured are not only protein aggregates but also other particles with different physical properties (refractive index) such as inorganic nanoparticles or silicone oil spheres, apparatuses capable of measuring them simultaneously irradiate the particles with laser light beams of a plurality of wavelengths in order to take advantage of the wavelength dependence of their physical properties. In such a case, it is preferable to select a higher-order polynomial, including the third-order polynomial of Equation 3 or the fourth-order polynomial of Equation 4, as the sensitivity correction model equation. In an apparatus designed to shorten the measurement time by expanding the light spot scanning range in the Z direction, it is preferable to select the three-dimensional offset Gaussian distribution formula of Equation 6, which enables more precise correction of detection sensitivity than a polynomial equation with respect to changes in the optical path length difference in the Z direction.

In an apparatus designed such that some sensitivity fluctuations in the X, Y, and Z directions are sufficiently small, it is easy and preferable to selectively correct the detection sensitivity in at least one axial direction by modifying the model equation disclosed in the invention by eliminating one or two coefficients of the particle positions x, y, and z.

As described above, according to the invention, according to the methods shown in FIGS. 8 and 9, an appropriate model equation is selected from a variety of model equations including the model equations described above, characteristics that differ for each apparatus are stored as coefficients, and the detection signal is corrected based on these coefficients in the customer's environment, thereby improving the variation in measurement results and reducing the differences between a plurality of apparatuses.

### <Embodiment 2: Summary>

The particle measurement apparatus according to Embodiment 2 can reduce detection sensitivity fluctuations caused by individual characteristics of the particle measurement apparatus by correcting the magnitude of the detection signal, by using a detection sensitivity correction function including a polynomial or a Gaussian distribution, with the light spot position in each of the X, Y, and Z directions as a variable.

### <Embodiment 3: Method for correcting sensitivity fluctuations when the refractive indices of measurement target particles are different>

The measurement targets handled by the invention are microparticles on the order of submicron to microns that undergo Brownian motion while suspended in a solvent, such as protein aggregates in biopharmaceuticals. As described above, in addition to protein aggregates, the invention can also measure commercially available polystyrene bead particles. Furthermore, it is also possible to measure Au particles, Ag particles, TiOx particles, silicone oil spheres, etc. Since these generally have a higher refractive index than protein aggregates, even when particles of the same size are measured, the amount of reflected light increases and the magnitude of the detection signal also increases depending on the measurement target. A detection signal corresponding to the type of the particle to be measured and calibration data of the particle size may be provided in the apparatus in advance. At this time, to avoid saturation of the detection signal, the amount of emitted light from the semiconductor laser may be reduced. As described above, the fluctuations in detection sensitivity in the X and Y directions according to the scanning position of the light spot is determined mainly by the emission intensity distribution based on the diffraction phenomenon that depends on the shape of the cavity of the semiconductor laser, so that even when the amount of emitted light from the semiconductor laser is reduced, the change is negligibly small. On the other hand, the main cause of the fluctuations in detection sensitivity in the Z direction according to the scanning position of the light spot is the change in coherence length, so it is necessary to select an appropriate correction amount according to the light emission power of the semiconductor laser.

Here, a model equation suitable for handling a plurality of semiconductor laser light emission power conditions according to the fluctuation factors of the detection sensitivity is shown. In the following, the light emission power of the semiconductor laser is represented as p, and the detection sensitivity correction function is represented as η(x, y, z, p).

The following equation is a correction model using a second-order polynomial. C_{xyz0}, Cₓ₁, Cₓ₂, C_{y1}, C_{y2}, C_{z0}(p), C_{z1}(p), and C_{z2}(p) are coefficients indicating the amount of correction of the detection sensitivity with respect to the individual characteristics of each apparatus. By imparting dependency on p as each coefficient in the Z direction, it is possible to appropriately reduce fluctuation factors of the detection sensitivity related to changes in the light emission power of the semiconductor laser.
[Mathematical expression 7] $\begin{matrix}η \left(x, y, z, p\right) = \left({C}_{xy 0}+{C}_{x 1}x+{C}_{x 2}{x}^{2}+{C}_{y 1}y+{C}_{y 2}{y}^{2}\right) \\ ⋅ \left({C}_{z 0}\left(p\right)+{C}_{z 1}\left(p\right) z+{C}_{z 2}\left(p\right) {z}^{2}\right)\end{matrix}$

The following equation is a correction model in which correction using a second-order polynomial in the X and Y directions and a Gaussian distribution in the Z direction are combined. C_{xyz0}, Cₓ₁, Cₓ₂, C_{y1}, C_{y2}, µ_{z}(p), and σ_{z}(p) are coefficients indicating the amount of correction of the detection sensitivity with respect to the individual characteristics of each apparatus. Similarly, by imparting dependency on p to each coefficient in the Z direction, it is possible to appropriately reduce fluctuation factors of the detection sensitivity related to changes in the light emission power of the semiconductor laser.
[Mathematical expression 8] $η \left(x, y, z, p\right) = \left({C}_{xy 0}+{C}_{x 1}x+{C}_{x 2}{x}^{2}+{C}_{y 1}y+{C}_{y 2}{y}^{2}\right) ⋅ \frac{1}{exp \left(-\frac{{\left(z-{μ}_{z}\left(p\right)\right)}^{2}}{2 {σ}_{z} {\left(p\right)}^{2}}\right)}$

For each model equation, the sensitivity is calibrated according to the method shown in FIG. 8. The difference from the previously described method is that calibration is performed under two different light emission power conditions: a light emission power p-p₀ suitable for measuring protein aggregates, and a light emission power p-p₁ (p₁ = 0.42p₀) suitable for measuring polystyrene bead particles.

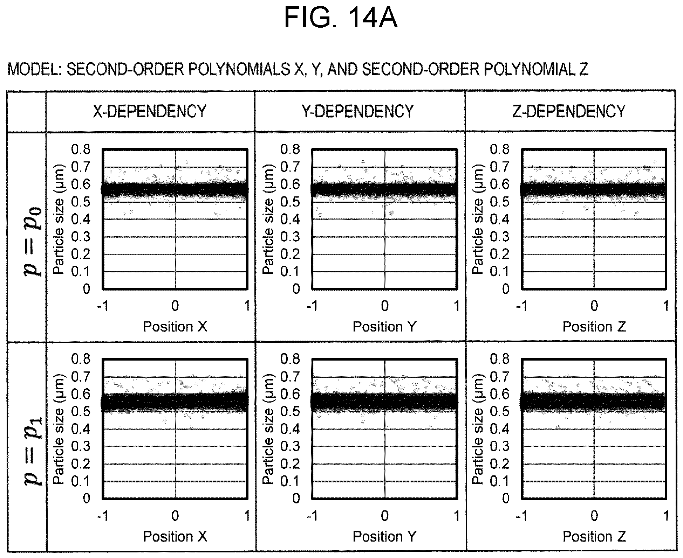

FIG. 14A shows the results of the correction model using the second-order polynomial shown in Equation 7. The raw data has been omitted. The upper part of FIG. 14A shows the result of application of the detection sensitivity correction function of the invention when the light emission power p = p₀. The lower part of FIG. 14A shows the result of application of the detection sensitivity correction function of the invention when the light emission power p = p₁. It can be seen that by applying the detection sensitivity correction function of the invention, the spot position dependence in the X, Y, and Z directions is reduced to an extent that it is not visible even in any light emission power condition.

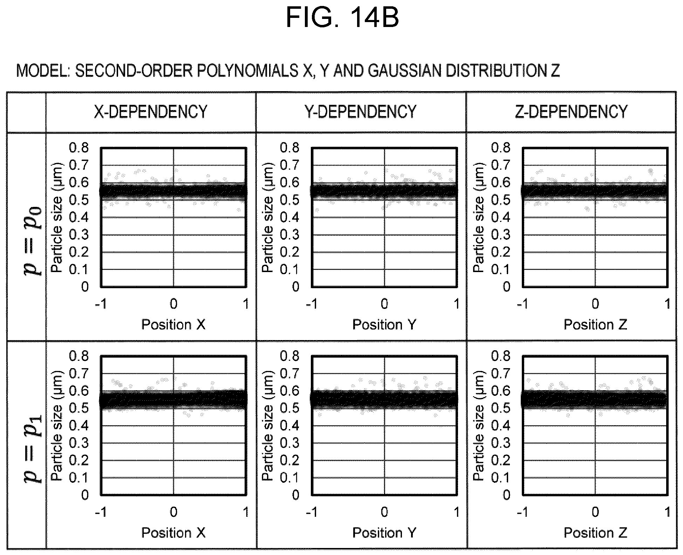

FIG. 14B shows the result of a correction model in which the second-order polynomial shown in Equation 8 and a Gaussian distribution are combined. The upper part of FIG. 14B shows the result of applying the invention when the light emission power p = p₀, and the lower part shows the result of applying the invention when the light emission power p = p₁. It can be seen that according to the invention, the spot position dependence in the X, Y, and Z directions is reduced to an extent that it is not visible even in any light emission power condition.

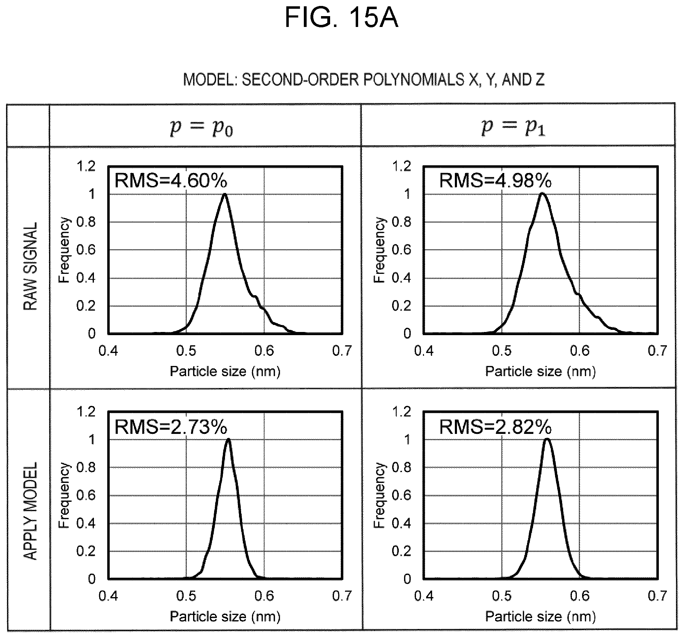

FIG. 15A shows the results of the correction model using the second-order polynomial shown in Equation 7. The upper part of the figure shows the results of the raw data before the application of the detection sensitivity correction function of the invention, and the lower part shows the results after the application of the detection sensitivity correction function of the invention. When the light emission power p = p₀, it can be seen that the symmetry of the size-frequency distribution of the standard particles about a peak is improved before and after the application of the invention, and the RMS value of the measured size is improved from 4.60% to 2.73%. Even in the case of light emission power p = p₁, it can be seen that the symmetry of the size-frequency distribution of the standard particles about a peak is improved before and after the application of the invention, and the RMS value of the measured size is improved from 4.98% to 2.82%.

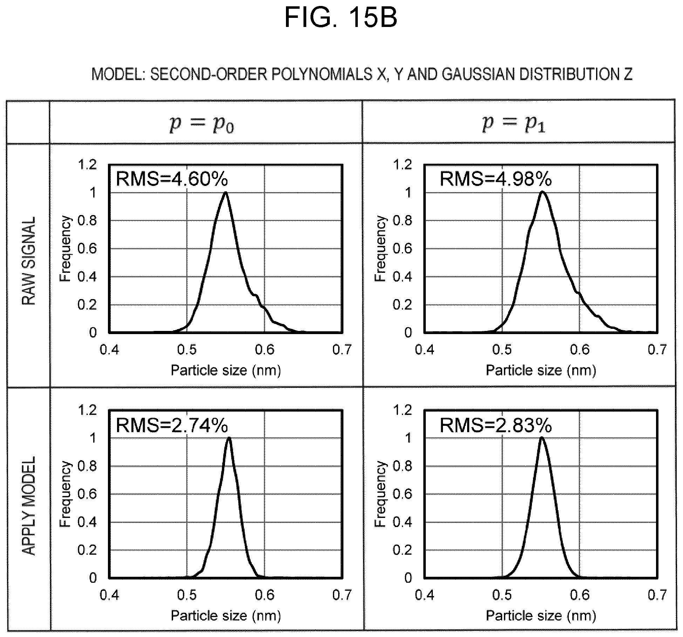

FIG. 15B shows the result of a correction model in which the second-order polynomial shown in Equation 8 and a Gaussian distribution are combined. The upper part of the figure shows the results of the raw data before the application of the detection sensitivity correction function of the invention, and the lower part shows the results after the application of the detection sensitivity correction function of the invention. Even in any light emission power, the symmetry of the size-frequency distribution of the standard particles about a peak is improved similarly before and after the application of the invention. In the case of the light emission power p = p₀, the RMS value of the measured size of the standard particles is improved from 4.60% to 2.74% before and after the application of the invention. Even in the case of the light emission power p = p₁, the RMS value of the measured size of the standard particles is improved from 4.98% to 2.83% before and after application of the invention.

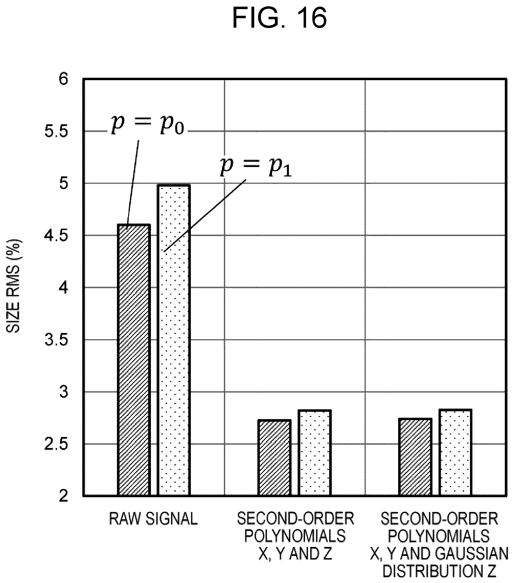

FIG. 16 shows a summary of the results of a comparison of RMS values of standard particle sizes, which indicates the effect of the detection sensitivity correction method of the invention. In FIG. 16, the horizontal axis is the correction model equations shown above, and the vertical axis is the RMS values of the measured standard particle size, with the cases of light emission power p = p₀ and p = p₁ shown side by side. As can be seen from FIG. 16, the RMS value of the standard particle size is reduced to the same extent by applying the invention, compared to the raw data to which the invention is not applied, and the effect of the detection sensitivity correction method of the invention is quantitatively demonstrated.

As described above, according to the invention, according to the methods shown in FIGS. 8 and 9, an appropriate model equation is selected from a variety of model equations including the model equations described above, characteristics that differ for each apparatus are stored as coefficients, and the detection signal is corrected based on these coefficients in the operational environment, thereby improving the variation in measurement results and reducing the differences between a plurality of apparatuses.

In the above, the cases of light emission power p = p₀ and p = p₁ have been shown as suitable emission powers for protein aggregates and polystyrene bead particles, respectively. However, it is also easy to add other suitable light emission powers for metal nanoparticles, silicone oil spheres, etc. In addition, it is also easy to use the FWHM value w_{z}(p) of the coherence length measured separately instead of σ_{z}(p) in Equation 8. In that case, as is well known, the conversion may be performed as follows. Therefore, since σ_{z}(p) and w_{z}(p) can be treated as being physically equivalent, the formulas that convert them into each other can also be treated as being equivalent.
[Mathematical expression 9] ${σ}_{z} \left(p\right) = \frac{{w}_{z} \left(p\right)}{2 \sqrt{- 2 log \left(0.5\right)}}$

In addition, in an apparatus designed to have sufficiently small sensitivity fluctuations in either the X or Y direction, it is easy and preferable to implement the invention by modifying the model equation disclosed in the invention to eliminate any of the coefficients for the particle positions x and y.

As described above, according to the invention, according to the methods shown in FIGS. 8 and 9, an appropriate model equation is selected from a variety of model equations including the model equations described above, characteristics that differ for each apparatus are stored as coefficients of the model equation for a plurality of light emission power conditions suitable for the measurement target, and the detection signal is corrected based on these coefficients in the customer's environment, thereby improving the variation in measurement results and reducing the differences between a plurality of apparatuses.

### <Embodiment 4: particle measurement apparatus>

FIG. 17 shows an example of the configuration of a particle measurement apparatus according to Embodiment 4 of the invention. The laser light emitted from the light source 100, whose light emission state is controlled by a laser driver 101 that controls the radio frequency superposition and emission power, is converted into parallel light by the collimating lens 102, the polarization orientation is adjusted by a λ/2 plate 103, whose optical axis is set at about 22.5 degrees with respect to the horizontal direction, and then the laser light is split into signal light and reference light by a polarizing beam splitter 104.

The reference light is converted into a circularly polarized state by a λ/4 plate 105, and then reflected by a reference light mirror 106. The λ/4 plate 105 rotates the polarization of the reference light by 90 degrees from the outward path, and the reference light is reflected by the polarizing beam splitter 104. After the signal light is deflected in its direction by an XY-direction composite deflection element 107 (scanning mechanism), the signal light is converted to a circularly polarized state by the action of a built-in λ/4 plate, and focused by an objective lens 108 within a sample 204 held in a sample container 200. A driving mechanism 109 (scanning mechanism) that moves the sample in the Z-axis direction has a function of scanning the focal position of the signal light along the Z-axis direction (optical axis direction). The components of the signal light reflected from individual particles contained in the sample 204 are deflected in the same direction as the outward path by the XY-direction composite deflection element 107. Due to the action of the built-in λ/4 plate, the polarization state of the outward path is rotated by 90 degrees, and the signal light is transmitted through the polarizing beam splitter 104. Here, the sample container 200 holds the sample 204 in a well and directs the signal light through a transparent window 202 into the sample. Reference numeral 203 denotes a resin member that forms the well of the sample container. A base plate 201 is in contact with the transparent window 202 and serves to mechanically hold the sample container 200 and to stabilize the temperature of the sample.

A signal light and the reference light are combined by the polarizing beam splitter 104 and guided to a detection optical system 112, and are split by a half beam splitter 113 via a pinhole 111 into transmitted light and reflected light.

The reflected light passes through a λ/4 plate 114, whose optical axis is set at approximately 45 degrees to the horizontal direction, and is then focused by a focusing lens 115 and split into two beams by a polarizing beam splitter 116. The two beams are then photoelectrically converted by photodetectors 150 and 151, respectively, and differentially amplified by a current differential amplifier 152 to become a detection signal 123.

The transmitted light passes through a λ/2 plate 118, whose optical axis is set at approximately 22.5 degrees to the horizontal direction, and is then focused by a focusing lens 119 and split into two beams by a polarizing beam splitter 120. The two beams are then photoelectrically converted by photodetectors 153 and 154, respectively, and differentially amplified by a current differential amplifier 155 to become a detection signal 122.

The detection optical system 112 shown here implements a homodyne phase diversity method, and the real part 122 and the imaginary part 123 of the detection signal are electrical signals corresponding to the real and imaginary parts of the electric field amplitude of the signal light reflected from individual particles contained in the sample 204. The detection signal is calculated by the signal processing unit 124 as a numerical value obtained by summing the squares of these values and then calculating the square root.

The signal processing unit 124 synthesizes the time-series data of the acquired detection signals to form three-dimensional image data in the XYZ directions within the sample, and also separates/tracks the data of individual particles contained therein to calculate the maximum value of the detection signal obtained under the focusing conditions for each particle. The signal processing unit 124 has a function of improving the variation in the measurement results and reducing the differences between a plurality of apparatuses, by performing calibration of the detection sensitivity fluctuations shown in FIGS. 8 and 9 and correction in the customer's environment. Finally, the signal processing unit 124 organizes the measurement results corrected by the methods shown in Embodiments 1 to 3 of the invention into a graph, a numerical table, or the like, and presents the results to the user on a display unit 125.

The implementation form of the signal processing unit 124 in the figure is an embedded microcomputer built into the apparatus, or a computer that is placed outside the apparatus and enables the exchange of necessary signals via an interface board or the like. When there are time or power constraints on the processing items of the signal processing unit 124, a dedicated processing circuit implemented by an FPGA or the like may be used as an auxiliary computing unit.

The storage unit 126 can store, for example, a correction model equation for each individual particle measurement apparatus. The signal processing unit 124 can use the correction model equation stored in the storage unit 126 to correct the difference between apparatuses in the detection sensitivity fluctuations by the method described in the above embodiment.

### <Modifications of the invention>

The invention is not limited to the above-described embodiments, and includes various modifications. For example, the above-described embodiment has been described in detail to clearly describe the invention, and the invention is not necessarily limited to having all of the configurations described. Furthermore, it is possible to replace a part of the configuration of one embodiment with the configuration of another embodiment, and it is also possible to add the configuration of another embodiment to the configuration of one embodiment. Furthermore, a part of the configuration of each embodiment can be added to, deleted from, or replaced with other configurations.

In the above embodiment, the coefficients (C_{z0}(p), C_{z1}(p), C_{z2}(p), µ_{z}(p), σ_{z}(p)) provided as a function of optical power p may be mathematical functions expressed by an equation, a data table describing numerical values corresponding to p, or any other format. That is, the functional relationship between p and these coefficients may be defined.

In the above embodiments, the signal processing unit 124 can be built inside the particle measurement apparatus, or the particle measurement apparatus may acquire only data describing the results of measuring the sample, and the signal processing unit 124 may be disposed outside the particle measurement apparatus to receive that data. In either case, the configuration of the particle measurement apparatus according to the invention is similar to that described in the above embodiments.

## Claims

1. A particle measurement apparatus which measures a particle in a liquid sample, comprising:
a light source that emits light;
a branching unit that branches the light from the light source into a signal light and a reference light;
a scanning mechanism that scans an irradiation position of a light spot of the signal light;
an irradiation unit that focuses the signal light by an objective lens and irradiates the sample with the signal light;
a detection unit that detects an interference signal obtained by causing reflected light from the particle to interfere with the reference light; and
a processing unit that measures a size of the particle by using the interference signal, wherein
the scanning mechanism is configured to scan the irradiation position in a first direction and a second direction which are perpendicular to each other in a plane perpendicular to an optical axis of the light, and to scan the irradiation position in a third direction parallel to the optical axis, and
the processing unit corrects the size of the particle using a correction function having at least one of the irradiation position in the first direction, the irradiation position in the second direction, and the irradiation position in the third direction as an input value.

2. The particle measurement apparatus according to claim 1, wherein
the correction function is configured by a polynomial having as terms, at least one of the irradiation position in the first direction, the irradiation position in the second direction, and the irradiation position in the third direction.

3. The particle measurement apparatus according to claim 2, wherein
the correction function is configured by linearly adding
a first or higher order-term of the irradiation position in the first direction,
a first or higher order-term of the irradiation position in the second direction, and
a first or higher order-term of the irradiation position in the third direction.

4. The particle measurement apparatus according to claim 1, wherein
the correction function is configured to correct the size of the particle by inverse of a normal distribution of at least one of the irradiation position in the first direction, the irradiation position in the second direction, and the irradiation position in the third direction.

5. The particle measurement apparatus according to claim 4, wherein
the correction function is configured by
a mean and a standard deviation of the irradiation position in the first direction on the normal distribution,
a mean and a standard deviation of the irradiation position in the second direction on the normal distribution, and
a mean and a standard deviation of the irradiation position in the third direction on the normal distribution.

6. The particle measurement apparatus according to claim 4, wherein
the correction function further includes a direct current value that offsets the normal distribution, and a sensitivity correction amount that multiplies the normal distribution by a constant.

7. The particle measurement apparatus according to claim 1, wherein
the correction function includes power of the light or a coherence length of the light as an input value.

8. The particle measurement apparatus according to claim 7, wherein
the correction function is configured by a first or higher order-term of the irradiation position in the third direction, and
the first or higher order-term of the irradiation position in the third direction has a functions with the power or the coherence length as input values, as coefficients.

9. The particle measurement apparatus according to claim 7, wherein
the correction function is configured by
a first or higher order-term of the irradiation position in the first direction,
a first or higher order-term of the irradiation position in the second direction, and
a Gaussian distribution formula that corrects the size of the particle in the third direction by inverse of a normal distribution of the irradiation position in the third direction,
the Gaussian distribution formula includes a mean and a standard deviation on the normal distribution,
the mean is configured by a function having the power or the coherence length as an input value, and
the standard deviation is configured by a function having the power or the coherence length as an input value.

10. The particle measurement apparatus according to claim 1, further comprising:
a storage unit that stores data describing the correction function, wherein
the processing unit corrects the size of the particles using the correction function read from the data.
